# EUROPÄISCHE PATENTANMELDUNG

(11) **EP 4 817 833 A1**
(43) Veröffentlichungstag der Anmeldung: **07.10.2026**
(21) Anmeldenummer: 25167798.5
(22) Anmeldetag: 01.04.2025
(51) Int. Cl.: B28D 7/02, B23B 47/34, B23Q 11/00

(54) **AUFFANGVORRICHTUNG FÜR ECKBEREICHE**

(71) Anmelder: Hilti Aktiengesellschaft, 9494 Schaan (LI)
(72) Erfinder: Specht, Helmut, 87660 Irsee (DE); Lorenz, Philipp, 80798 München (DE); Kunz, Bernhard, 9494 Schaan (LI); Vida, Gabor, 7000 Chur (CH); Golubovic, Goran, 86807 Buchloe (DE); Santeiu, Claudiu Radu, 9470 Buchs (CH)
(74) Vertreter: Hilti Aktiengesellschaft Corporate Intellectual Property

(57) **Zusammenfassung**

Die vorliegende Erfindung betrifft eine Auffangvorrichtung (200) zum Auffangen von Bohrschlamm (B) oder Staub, der bei Betrieb eines Kernbohrgeräts entsteht, wobei die Vorrichtung folgendes aufweist: einen Absaugkörper (202) mit einer Bohröffnung (208), welche sich durch den Absaugkörper (202) erstreckt und dazu ausgebildet ist eine Bohrkrone aufzunehmen, wobei der Absaugkörper (202) einen Hohlraum aufweist, welcher sich zumindest teilweise um die Bohröffnung (208) erstreckt; und wenigstens einen Ansaugkörper , welcher mit dem Absaugkörper verbunden ist und dazu ausgebildet ist einen Vakuumraum zusammen mit einer Oberfläche, insbesondere Wand- oder Deckenoberfläche, auszubilden,
wobei der Vakuumraum des Ansaugkörpers (204, 206) strömungstechnisch vom Hohlraum des Absaugkörpers (202) getrennt ist.

## Beschreibung

Die vorliegende Erfindung betrifft Auffangvorrichtung zum Auffangen von Bohrschlamm oder Staub, der bei Betrieb eines Kernbohrgeräts entsteht.

### Hintergrund der Erfindung

Im Bereich der Kernbohrgeräte sind verschiedene Vorrichtungen bekannt, um Bohrschlamm aufzufangen, der bei der Durchführung einer Kernbohrung entsteht. Beispielsweise sind Wasserfangringe bekannt, die mit mechanischen Befestigungsmitteln, wie Klemmen oder Spannmitteln, an dem Untergrund befestigt werden können. Andere Vorrichtungen werden mit Hilfe eines Unterdrucks, der von einem Sauggerät erzeugt wird, an einem Untergrund befestigt. Die mechanischen Befestigungsmittel sind allerdings mit dem Nachteil verbunden, dass sie häufig nicht zerstörungsfrei aus dem Untergrund herausgelöst werden können, so dass kleinere Beschädigungen am Untergrund nicht ausgeschlossen werden können.

Bei der Befestigung der Wasserfangringe mit Unterdruck besteht das Problem, dass der Wasserfangring nur dann an dem Untergrund befestigt und dort gehalten werden kann, wenn eine Sauganlage einer Wasseraufbereitungsvorrichtung eingeschaltet und in Betrieb ist. Allerdings ist ein Dauerbetrieb der Sauganlage zur Durchführung der Kernbohrung nicht erforderlich und Sauggeräte verbrauchen gerade im Leerlauf besonders viel elektrische Energie. Dieser Nachteil wiegt umso schwerer, wenn akkubetriebene Sauggeräte zum Einsatz kommen, die aufgrund ihrer Versorgung mit elektrischer Energie durch Batterien oder dergleichen nur über eine limitierte Menge an Bord-Energie verfügen. Aber auch wenn netzbetriebene Wasseraufbereitungsvorrichtungen verwendet werden, führt die Befestigung von konventionellen Wasserfangringen mittels eines Sauggeräts zu einem unnötig hohen Energieverbrauch. Außerdem kann ein Dauerbetrieb der Wasseraufbereitungsvorrichtung zu einer erhöhten Lärmbelastung auf einer Baustelle führen.

Ein weiterer Nachteil ist, dass bekannte Wasserfangringe nur bei laufendem Betrieb eines Sauggeräts an dem Untergrund befestigt werden können, sodass der Bohrort bzw. die Baustelle nicht für die Durchführung der Kernbohrung vorbereitet werden können. Dies wäre aber wünschenswert für einen effizienten Ablauf von Arbeiten auf einer Baustelle.

Die Aufgabe, die der vorliegenden Erfindung zugrunde liegt, besteht darin, die vorstehend beschriebenen Mängel und Nachteile des Standes der Technik zu überwinden und eine Auffangvorrichtung zum Auffangen von Bohrschlamm bereitzustellen, mit der die Durchführung von Kernbohrarbeiten zeit- und energieeffizient unterstützt werden kann. Insbesondere wenn die bereitzustellende Auffangvorrichtung mit einem akkubetriebenen Sauggerät zusammen verwendet wird, um Bohrschlamm aus dem Arbeitsbereich eines Kernbohrgeräts zu entfernen, soll das System nicht die Laufzeit des akkubetriebenen Sauggeräts verkürzen, sondern einen Beitrag dazu leisten, die Reichweite einer "Batterieladung" zu erhöhen. Darüber hinaus soll die Auffangvorrrichtung einfach und unkompliziert an einem Untergrund befestigt werden können und eine gute Haftung an verschiedenen, auch rauhen, Oberflächen gewährleisten. Des Weiteren würde es die Fachwelt begrüßen, wenn das bereitzustellende System für viele unterschiedlich große Bohrkronen eines Kernbohrgeräts verwendbar wäre.

Auf Grundlage der oben genannten Problemstellung ist es eine Aufgabe der vorliegenden Erfindung, eine Auffangvorrichtung anzugeben die energieeffizient mit einem akkubetriebenen Sauggerät zusammen verwendet wird, um Bohrschlamm aus dem Arbeitsbereich eines Kernbohrgeräts zu entfernen. Die Auffangvorrichtung soll nicht die Laufzeit des akkubetriebenen Sauggeräts verkürzen, sondern einen Beitrag dazu leisten, die Reichweite einer "Batterieladung" zu erhöhen. Darüber hinaus soll das System einfach und unkompliziert an einem Untergrund befestigt werden können und eine gute Haftung an verschiedenen, auch rauhen, Oberflächen gewährleisten. Des Weiteren würde es die Fachwelt begrüßen, wenn die bereitzustellende Auffangvorrichtung für viele unterschiedlich große Bohrkronen eines Kernbohrgeräts verwendbar wäre.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

Dementsprechend betrifft die vorliegende Erfindung eine Auffangvorrichtung zum Auffangen von Bohrschlamm (B) oder Staub, der bei Betrieb eines Kernbohrgeräts entsteht, wobei die Vorrichtung folgendes aufweist:
- einen Absaugkörper mit einer Bohröffnung, welche sich durch den Absaugkörper erstreckt und dazu ausgebildet ist eine Bohrkrone aufzunehmen, wobei der Absaugkörper einen Hohlraum aufweist, welcher sich zumindest teilweise um die Bohröffnung erstreckt;
- wenigstens einen Ansaugkörper, welcher mit dem Absaugkörper verbunden ist und dazu ausgebildet ist einen Vakuumraum zusammen mit einer Oberfläche, insbesondere Wand- oder Deckenoberfläche, auszubilden,
wobei der Vakuumraum des Ansaugkörpers strömungstechnisch vom Hohlraum des Ansaugkörpers getrennt ist.

Mit der Erfindung kann eine Auffangvorrichtung bereitgestellt werden, die unabhängig vom Kernbohrgerät und/oder einem externen Sauggerät an einem Untergrund befestigt werden kann. Anwendungstests haben gezeigt, dass die Auffangvorrichtung besonders einfach und schnell an einem Einsatzort an einen Untergrund befestigt werden kann, so dass eine schnelle Einsatzbereitschaft gewährleistet werden kann. Insbesondere kann das System vor dem tatsächlichen Beginn der Kernbohrung an dem Untergrund befestigt werden, da der Unterdruck, der zur Befestigung der Auffangvorrichtung verwendet wird, von einer separaten Vakuumpumpe erzeugt wird. Insofern ist die Befestigung der vorgeschlagenen Auffangvorrichtung unabhängig von der Verwendung oder dem Betrieb einer Wasseraufbereitungsvorrichtung, die zum Aufsaugen des Bohrschlamms verwendet wird. Außerdem kann mit der Erfindung die Geräuschemission auf einer Baustelle sowie der Energieverbrauch gesenkt werden.

Nach einer weiteren Ausführungsform ist der Absaugkörper im Wesentlichen ringförmig ausgebildet. Durch die ringförmige Ausbildung des Absaugkörpers kann dieser einen möglichst kleinen Umfang aufweisen. Der Durchmesser der Ringform des Absaugkörpers ist dabei im Wesentlichen durch den Durchmesser der korrespondierenden Bohrkrone bestimmt. Durch die ringförmige Ausbildung des Absaugkörpers, muss dieser nur unwesentlich größer sein, als die Bohröffnung. Somit lässt sich durch den ringförmigen Absaugkörper erreichen, dass die Auffangvorrichtung möglichst nahe and die Ecke der zu bearbeitenden Oberfläche platziert werden kann. Selbstverständlich ist alternativ auch denkbar, den Absaugkörper in vielen anderen Formen auszubilden, wie beispielsweise eine Rechteckform.

Nach einer weiteren Ausführungsform überdeckt der wenigstens eine Ansaugkörper zwischen 40% und 75% eines Außenumfangs des Absaugkörpers. Gemäß dieser Ausführungsform bleibt wenigstens ein Viertel des Außenumfangs des Absaugkörpers frei von dem wenigstens einen Ansaugkörper. Das mindestens eine Viertel kann demnach möglichst weit in einen Eckbereich eingebracht werden, wobei die Ansaugkörper das Einschieben des Absaugkörpers in den Eckbereich nicht behindern, wie dies unten näher dargestellt werden wird. Durch die Überdeckung von mindestens 40 % des Außenumfangs des Absaugkörpers wird gleichzeitig gewährleistet, dass der Absaugkörper stabil am Untergrund befestigt ist. Es wird insbesondere verhindert, dass sich der Absaugkörper relativ zum Ansaugkörper bewegt. Hierdurch werden Schädigungen der Auffangvorrichtung vermieden.

Nach einer weiteren Ausführungsform weist die Auffangvorrichtung einen ersten und einen zweiten Ansaugkörper auf, wobei die beiden Ansaugkörper in Umfangrichtung des Absaugkörpers voneinander beabstandet sind. Gemäß dieses Beispiels wird der Absaugkörper an zwei unterschiedlichen, d.h. voneinander beabstandeten Stellen mit der zu bearbeitenden Oberfläche befestigt. Hierdurch ergibt sich eine größere Stabilität. Gleichzeitig kann durch den zweiten Ansaugkörper ein Verdrehen der Auffangvorrichtung verhindert werden. Die beiden Ansaugkörper können beispielsweise an gegenüberliegenden Seiten des Absaugkörpers angebracht sein. Die Ansaugkörper sind im Wesentlichen flügelartig ausgebildet.

Nach einer weiteren Ausführungsform weist der erste Ansaugkörper eine im Wesentlichen achsensymmetrische Außenkontur zum zweiten Ansaugkörper auf. Die symmetrische Ausbildung der beiden Ansaugkörper hat einerseits Vorteile bei der Produktion, da viele Bestandteile der Ansaugkörper gleichzeitig bzw. auf den gleichen Maschinen herstellbar sind. Beispielsweise können die beiden Ansaugkörper identische Dichtungen aufweisen, um den Vakuumraum gegenüber der zu bearbeitenden Oberfläche abzudichten. Die symmetrische Ausbildung hat darüber hinaus den Vorteil, dass die Auffangvorrichtung in gleicher Weise in jeder Ecke der zu bearbeitenden Wand oder Deckenoberfläche angebracht werden kann.

Nach einer weiteren Ausführungsform ist der erste Ansaugkörper strömungstechnisch mit dem zweiten Ansaugkörper verbunden, insbesondere über einen Luftkanal, welcher zumindest teilweise durch den Absaugkörper ausgebildet ist. Durch die strömungstechnische Verbindung der beiden Ansaugkörper ist es ausreichend, wenn nur einer der beiden Ansaugkörper mit einem Sauganschluss ausgestattet ist. Über den Luftkanal kann dementsprechend die Luft aus beiden Vakuumräumen der beiden Ansaugkörper mit einem einzelnen Sauganschluss gezogen werden. Durch die integrale Ausbildung des Luftkanals im Absaugkörper wird der Platzbedarf der erfindungsgemäßen Auffangvorrichtung weiter reduziert, da keine weiteren, externen Strukturen (externe Luftkanäle) notwendig sind.

Nach einer weiteren Ausführungsform weist der erste Ansaugkörper eine erste Seitenfläche auf, welche im Wesentlichen senkrecht zu einer ersten Seitenfläche des zweiten Ansaugkörpers verläuft, wobei die beiden ersten Seitenflächen der Ansaugkörper in Umfangrichtung des Absaugkörpers voneinander beabstandet sind. Durch die senkrechte Anordnung der ersten Seitenflächen der beiden Ansaugkörper, lässt sich die erfindungsgemäße Auffangvorrichtung besser in die Eckbereiche der zu bearbeitenden Oberfläche bewegen. Dies ist insbesondere deshalb der Fall, da Wand bzw. Deckenübergänge in der Regel ebenfalls senkrecht zueinander verlaufen. Die ersten Seiten der Ansaugkörper können sich somit an die Wand- bzw. Deckenoberfläche anschmiegen, um möglichst weit in den Eckbereich zu gelangen.

Nach einer weiteren Ausführungsform sind die ersten Seitenflächen des ersten und zweiten Ansaugkörpers im Wesentlichen tangential zum Außenumfang des Absaugkörper angeordnet. Durch die tangentiale Anordnung der ersten Seitenflächen der Ansaugkörper gegenüber dem Außenumfang des Absaugkörpers wird gewährleistet, dass lediglich der Durchmesser des ringförmigen Absaugkörpers limitierend für den Abstand der Bohröffnung von der Wandecke ist. Es sei an dieser Stelle erwähnt, dass gemäß der vorliegenden Erfindung auch lediglich ein Ansaugkörper vorgesehen sein kann. Auch in diesem Fall ist es vorteilhaft, den einzelnen Ansaugkörper mit einer ersten Seitenfläche auszustatten, welche tangential zum Außenumfang des Absaugkörpers angeordnet ist. Es lassen sich hierdurch die gleichen Vorteile erzielen.

Nach einer weiteren Ausführungsform weist der erste Ansaugkörper eine zweite Seitenfläche auf, welche der ersten Seitenfläche im Wesentlichen gegenüber liegt, wobei der zweite Ansaugkörpers eine zweite Seitenfläche aufweist, welche der ersten Seitenfläche im Wesentlichen gegenüber liegt, und wobei die beiden zweiten Seitenflächen der Absaugkörper in Umfangrichtung des Absaugkörpers voneinander beabstandet sind, wobei der Abstand der beiden Seitenflächen derart bemessen ist, dass zumindest ein Teil eines Bohrständers zwischen den zweiten Seitenflächen angeordnet werden kann. Gemäß dieser Ausführungsform sind die beiden Ansaugkörper nicht nur an ihrer ersten Seitenfläche, sondern auch an ihrer zweiten Seitenfläche, voneinander beabstandet. Mit anderen Worten, die Ansaugkörper sind einerseits gegen den Uhrzeigersinn und andererseits im Uhrzeigersinn voneinander beabstandet. Dabei kann der Abstand sowie die Kontur der zweiten Seitenflächen derart gewählt werden, dass diese auf ein vorderes Ende des Bohrständers angepasst sind. Beispielsweise können der Abstand bzw. die Konturen der zweiten Seitenflächen derart ausgebildet sein, dass diese das vordere Ende des Bohrständers umschließen.

Nach einer weiteren Ausführungsform ist der wenigstens eine Ansaugkörper im Wesentlichen dreieckig oder teilringförmig ausgebildet. Die Dreiecksform hat den Vorteil, dass die Ansaugkörper einerseits besonders nahe an die Eckbereiche herangeführt werden können und, gleichzeitig, einen möglichst großen Freiraum zwischen den zweiten Seitenflächen für die Anordnung des Bohrständers bereitstellen.

Nach einer weiteren Ausführungsform weist der wenigstens eine Ansaugkörper einen Saugstutzen auf, welcher dazu ausgebildet ist, im Betrieb mit einem Saugschlauch einer Vakuumpumpe verbunden zu werden.

Nach einer weiteren Ausführungsform weist der wenigstens eine Ansaugkörper eine Dichtung zum Abdichten des Vakuumraums gegenüber der Oberfläche auf, und wobei der Saugstutzen an einer der Dichtung gegenüberliegenden Oberfläche des Saugkörpers angeordnet ist.

Nach einer weiteren Ausführungsform weist der Absaugkörper eine Dichtung zum Abdichten des Hohlraums gegenüber der Oberfläche auf.

Nach einer weiteren Ausführungsform weist der Absaugkörper wenigstens eine Absaugöffnung aufweist, welche an einer Innenwand des Hohlraums angeordnet ist und dazu dient Bohrschlamm oder Staub aus dem Hohlraum abzusaugen, wobei die Absaugöffnung über einen Absaugkanal mit einem Absaugstutzen verbunden ist, und wobei der Absaugstutzen mit dem Außenumfang des Absaugkörpers verbunden ist.

Nach einer weiteren Ausführungsform überlappt der Absaugstutzen den wenigstens einen Ansaugkörper überlappt und/oder ist Teil des Ansaugkörpers. Somit verleihen die Ansaugkörper auch dem Absaugstutzen Stabilität. Gleichzeitig wird durch die überlappende Anordnung gewährleistet, dass der Abstand des der Bohröffnung vom Eckbbereich nicht durch den Absaugstutzen limitiert ist.

Ein weiterer Aspekt der vorliegenden Offenbarung betrifft eine Auffangvorrichtung zum Auffangen von Bohrschlamm oder Staub, der bei Betrieb eines Kernbohrgeräts entsteht, wobei die Vorrichtung folgendes aufweist:
- einen Absaugkörper mit einer Bohröffnung, welche sich durch den Absaugkörper erstreckt und dazu ausgebildet ist eine Bohrkrone aufzunehmen, wobei der Absaugkörper einen Hohlraum aufweist, welcher sich zumindest teilweise um die Bohröffnung erstreckt;
- einen ersten Ansaugkörper, welcher mit dem Absaugkörper verbunden ist und dazu ausgebildet ist einen Vakuumraum zusammen mit einer Oberfläche, insbesondere Wand- oder Deckenoberfläche, auszubilden,
- einen zweiten Ansaugkörper, welcher mit dem Absaugkörper verbunden ist und dazu ausgebildet ist einen Vakuumraum zusammen mit einer Oberfläche, insbesondere Wand- oder Deckenoberfläche, auszubilden,
wobei die beiden Ansaugkörper in Umfangrichtung des Absaugkörpers voneinander beabstandet sind.

Ein weiterer Aspekt der vorliegenden Offenbarung betrifft eine Auffangvorrichtung zum Auffangen von Bohrschlamm oder Staub, der bei Betrieb eines Kernbohrgeräts entsteht, wobei die Vorrichtung folgendes aufweist:
- einen Absaugkörper mit einer Bohröffnung, welche sich durch den Absaugkörper erstreckt und dazu ausgebildet ist eine Bohrkrone aufzunehmen, wobei der Absaugkörper einen Hohlraum aufweist, welcher sich zumindest teilweise um die Bohröffnung erstreckt;
- wenigstens einen Ansaugkörper, welcher mit dem Absaugkörper verbunden ist und dazu ausgebildet ist einen Vakuumraum zusammen mit einer Oberfläche, insbesondere Wand- oder Deckenoberfläche, auszubilden,
wobei der wenigstens eine Ansaugköper eine erste Seitenfläche aufweist, welche im Wesentlichen parallel zu einer Tangente eines Außenumfanges des Absaugkörpers ausgerichtet ist.

Nach einer weiteren Ausführungsform verläuft die erste Seitenfläche des Ansaugkörpers auf der Tangente des Außenumfangs des Absaugkörpers.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Kernbohrsystems mit Auffangvorrichtung;
- Fig. 2: eine perspektivische Ansicht von unten auf eine Auffangvorrichtung nach einer Ausführungsform der vorliegenden Erfindung;
- Fig. 3: eine perspektivische Ansicht von oben auf die Auffangvorrichtung gemäß Fig. 2;
- Fig. 4: eine Ansicht von unten auf die Auffangvorrichtung gemäß Fig. 2;
- Fig. 5: eine schematische Darstellung einer Auffangvorrichtung nach einer Ausführungsform der vorliegenden Erfindung;
- Fig. 6: eine Draufsicht auf ein Kernbohrsystem mit Auffangvorrichtung nach einer Ausführungsform der vorliegenden Erfindung;
- Fig. 7: eine Draufsicht auf ein Kernbohrsystem mit Auffangvorrichtung nach einer Ausführungsform der vorliegenden Erfindung;

### Detaillierte Beschreibung

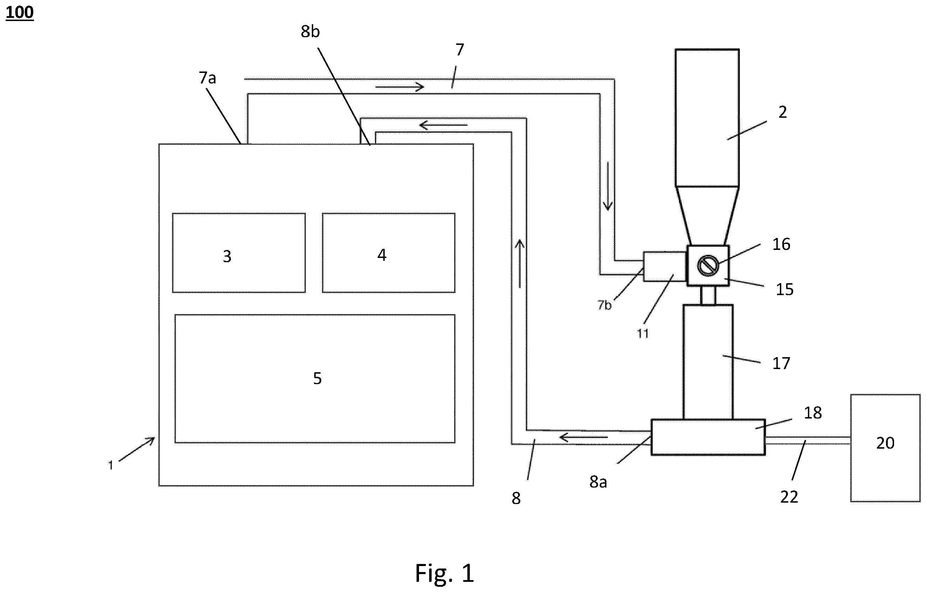

Fig. 1 zeigt ein Kernbohrsystem 100. Das Kernbohrsystem 100 weist eine als Wasseraufbereitungsanlage ausgestaltete Aufbereitungsvorrichtung 1 auf, welche mit einer als Kernbohrmaschine ausgestalteten Werkzeugmaschine 2 verbunden ist. Die Kernbohrmaschine 2 ist mit einem als Bohrkrone ausgestalteten Werkzeug 17 verbunden. Die als Wasseraufbereitungsanlage ausgestaltete Aufbereitungsvorrichtung 1 ist dazu ausgebildet Kühlwasser am Werkzeug bereitzustellen und verbrauchtes Kühlwasser/Bohrschlamm abzusaugen und zu reinigen.

Die Wasseraufbereitungsanlage 1 enthält im Wesentlichen ein Gehäuse, einen Wasserspeicher 5, einen Bohrschlammspeicher, einen Filter 4, eine erste Leitung 7, eine zweite Leitung 8, eine Pumpeneinrichtung 3 und eine Steuerungseinrichtung.

Das Gehäuse ist im Wesentlichen als Hohlkörper ausgestaltet. Darüber hinaus enthält das Gehäuse an einer Außenseite eine Schnittstelle zur Versorgung mit elektrischer Spannung, bspw. eine Batterieaufnahme. In dem Gehäuse ist sowohl der Wasserspeicher 5 als auch der Bohrschlammspeicher positioniert. Der Wasserspeicher 4 dient dazu einen Vorrat an Frischwasser zum Kühlen und Spülen aufzubewahren.

Der Bohrschlammspeicher ist im Wesentlichen in Form eines zylindrischen Behälters ausgestaltet. Die Seitenwände sowie der Boden sind als Filter 4 ausgebildet und bestehen daher aus einen filterartigen Material, welches dazu geeignet ist, den Bohrschlamm zurückzuhalten und lediglich Wasser durchdringen zu lassen. Der Bohrschlammspeicher und der Wasserspeicher 5 sind insbesondere so zueinander positioniert, dass das Wasser, welches aus dem Filter 4 des Bohrschlammspeichers austritt, in dem Wasserspeicher 5 aufgefangen wird.

Die erste Leitung 7 ist in Form eines flexiblen Schlauchs ausgestaltet und enthält ein erstes Ende 7a sowie ein zweites Ende 7b. Das erste Ende 7a der ersten Leitung 7 ist mit dem Wasserspeicher 5 verbunden. Das zweite Ende 7b der ersten Leitung 7 ist mit einem Verbindungsstück 15 an der Kernbohrmaschine 2 verbunden. Das Verbindungsstück 15 enthält ein Ventil 16, mit dem der Durchfluss durch die erste Leitung 7 geöffnet und geschlossen werden kann. Die geöffnete Stellung des Ventils 16 dient dazu, dass Wasser durch die erste Leitung 7 zu dem als Bohrkrone ausgestalteten Werkzeug 17 gelangen kann. Die geschlossene Stellung des Ventils 16 dient dazu, dass kein Wasser durch die erste Leitung 7 zu der Bohrkrone 17 gelangen kann.

Die erste Leitung 7 dient zum Transport von Frischwasser aus dem Wasserspeicher 4 zu der Bohrkrone 17. Wie in Fig. 1 gezeigt, ist die erste Leitung 7 so über das Verbindungsstück 15 mit der Kernbohrmaschine 2 verbunden, dass das Wasser in das Innere der Bohrkrone 17 gelangt. Das Wasser kühlt und spült die Bohrkrone 17 während eines Bohrvorgangs. Entsprechend einer alternativen Ausgestaltung kann auch vorgesehen sein, dass die erste Leitung 7 zuerst zur Kühlung durch die Kernbohrmaschine 2 geführt wird, bevor es schließlich zum Kühlen und Spülen in die Bohrkrone 17 gelangt.

Die zweite Leitung 8 ist ebenfalls in Form eines flexiblen Schlauchs ausgestaltet und enthält ein erstes Ende 8a und ein zweites Ende 8b. Das erste Ende 8a der zweiten Leitung 8 ist mit einer Auffangvorrichtung 18 verbunden. Die Auffangvorrichtung 18 ist an dem Ende der Bohrkrone 17 positioniert und dient dazu den beim Bohrvorgang anfallenden Bohrschlamm (Gesteine, Staub und Wasser) aufzufangen. Das zweite Ende 8b der zweiten Leitung 8 ist so mit dem Bohrschlammspeicher verbunden, dass der Bohrschlamm über die zweite Leitung 8 von der Auffangvorrichtung 18 in den Bohrschlammspeicher gelangen kann.

Die Pumpeneinrichtung 3 enthält einen ersten Pumpenabschnitt und einen zweiten Pumpenabschnitt. Der erste Pumpenabschnitt ist mit der ersten Leitung 7 verbunden und dient dazu, Frischwasser aus dem Wasserspeicher 4 zu der Bohrkrone 17 zu fördern bzw. zu pumpen. Der zweite Pumpenabschnitt ist mit der zweiten Leitung 8 verbunden und dient dazu, Bohrschlamm aus der Auffangvorrichtung 18 in den Bohrschlammspeicher zu fördern bzw. zu pumpen.

Die Auffangvorrichtung 18 kann einerseits am Boden angeordnet werden. In diesem Fall ist es nicht notwendig, die Auffangvorrichtung am Untergrund zu befestigen. Bei Wand bzw. Deckenbohrungen ist es jedoch notwendig, die Auffangvorrichtung 18 an der zu bearbeitenden Oberfläche zu befestigen. Gemäß der vorliegenden Erfindung ist die Auffangvorrichtung derart ausgebildet, dass diese durch einen Unterdruck an der zu bearbeitenden Oberfläche befestigt werden kann. Mit andere Worten, die Auffangvorrichtung 18 kann sich an der Oberfläche festsaugen. Hierzu weist die Auffangvorrichtung 18 einen nicht im Detail dargestellten Ansaugkörper auf, welcher dazu ausgebildet ist, einen Vakuumraum zusammen mit der Oberfläche, insbesondere Wand- oder Deckenoberfläche, auszubilden. Eine Vakuumpumpe 20 kann über einen Vakuumschlauch 22 mit dem Ansaugkörper verbunden werden, um den Vakuumraum mit Unterdruck zu beaufschlagen.

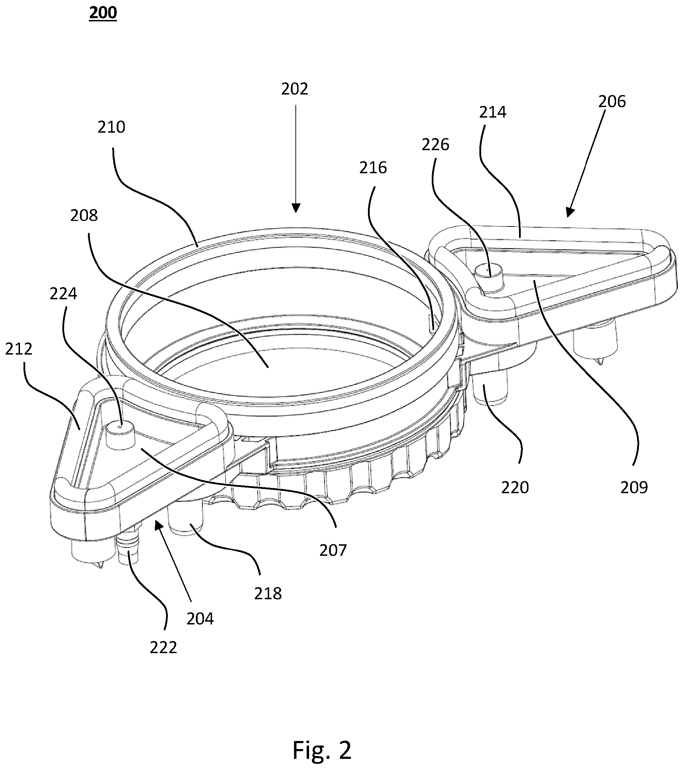

Eine detaillierte Darstellung einer Auffangvorrichtung gemäß einer Ausführungsform der vorliegenden Erfindung ist in den Figuren 2 bis 4 gezeigt. Die Figur 2 zeigt eine perspektivische Ansicht von unten auf die Auffangvorrichtung 200. Die Auffangvorrichtung 200 weist einen Absaugkörper 202 auf. In der hier dargestellten Ausführungsform ist der Absaugkörper insbesondere ringförmig ausgebildet. Eine Bohröffnung 208 erstreckt sich durch den Absaugkörper 202. Die Bohröffnung 208 ist dazu ausgebildet, eine Bohrkrone eines Kernbohrgeräts aufzunehmen. Dementsprechend ist der Durchmesser der Bohröffnung 208 auf den Durchmesser der Bohrkrone angepasst. Mit anderen Worten, die Auffangvorrichtung der vorliegenden Erfindung kann Absaugkörper mit unterschiedlich großen Bohröffnungen aufweisen, welche jeweils auf die zu verwendende Bohrkrone zugeschnitten ist.

In der hier dargestellten Ausführungsform weist die Auffangvorrichtung 200 zwei Ansaugkörper 204, 206 auf. Wie oben bereits angedeutet, ist es jedoch auch vorstellbar, dass die Auffangvorrichtung nur einen Ansaugkörper aufweist.

Die beiden Ansaugkörper 204, 206, sind mit dem Absaugkörper 202 verbunden. Insbesondere sind die beiden Ansaugkörper 204, 206 fest mit dem Absaugkörper 202 verbunden. Die Ansaugkörper 204, 206 können nicht relativ zum Absaugkörper 202 bewegt werden.

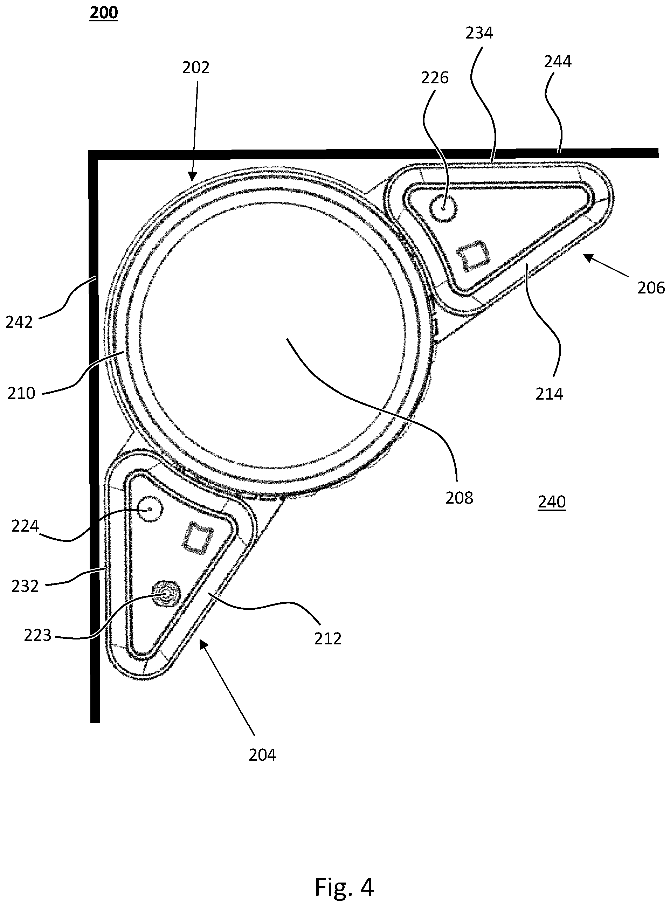

Gemäß der Ausführungsform in den Figuren 2 bis 4 weisen die Ansaugkörper 204, 206 eine im Wesentlichen identische Form auf. Insbesondere handelt es sich hierbei um eine Dreiecksform, wie diese auch Hinblick auf Figur 4 näher beschrieben werden wird.

Der Absaugkörper 202 weist eine erste Dichtung 210 auf. Die erste Dichtung 210 des Absaugkörpers 202 ist auf einer Unterseite des Absaugkörpers 202 angeordnet. Sie dient dazu, eine dichtende Verbindung mit der zu bearbeitenden Oberfläche (zum Beispiel Wand- oder Deckenoberfläche) herzustellen. Zusammen mit der zu bearbeitenden Oberfläche bildet der Absaugkörper 202 einen Hohlraum aus, welcher sich um die Bohröffnung 208 erstreckt. Der Hohlraum wird durch die erste Dichtung 210 gegenüber der zu bearbeitenden Oberfläche abgedichtet, um ein Herauslaufen des Kühlwassers bzw. Bohrschlamms aus dem Inneren des Absaugkörpers 202 zu verhindern.

Der erste Ansaugkörper 204 weist eine zweite Dichtung 212 auf. Die zweite Dichtung 212 dient dazu, einen im Inneren des ersten Ansaugkörpers 204 ausgebildeten Hohlraum gegenüber der zu bearbeitenden Oberfläche abzudichten. Zusammen mit der zu bearbeitenden Oberfläche wird durch den Hohlraum ein erster Vakuumraum 207 ausgebildet. Der erste Vakuumraum 207 dient dazu, die Auffangvorrichtung 200 über einen Unterdruck an der zu bearbeitenden Oberfläche zu befestigen.

Der zweite Ansaugkörper 204 weist eine dritte Dichtung 214 auf. Die dritte Dichtung 214 dient dazu, einen im Inneren des zweiten Ansaugkörpers 206 ausgebildeten Hohlraum gegenüber der zu bearbeitenden Oberfläche abzudichten. Zusammen mit der zu bearbeitenden Oberfläche wird durch den Hohlraum ein zweiter Vakuumraum 209 ausgebildet. Der zweite Vakuumraum 209 dient dazu, die Auffangvorrichtung 200 über einen Unterdruck an der zu bearbeitenden Oberfläche zu befestigen.

Der erste Ansaugkörper 204 weist einen Vakuumanschluss 222 auf. Der Vakuumanschluss 222 ist in der hier dargestellten Ausführungsform auf einer der ersten Dichtung 212 gegenüberliegenden Seite des ersten Ansaugkörpers 204 angeordnet. Mit anderen Worten, der Vakuumanschluss 222 ist auf der Oberseite des ersten Ansaugkörpers 204 angeordnet.

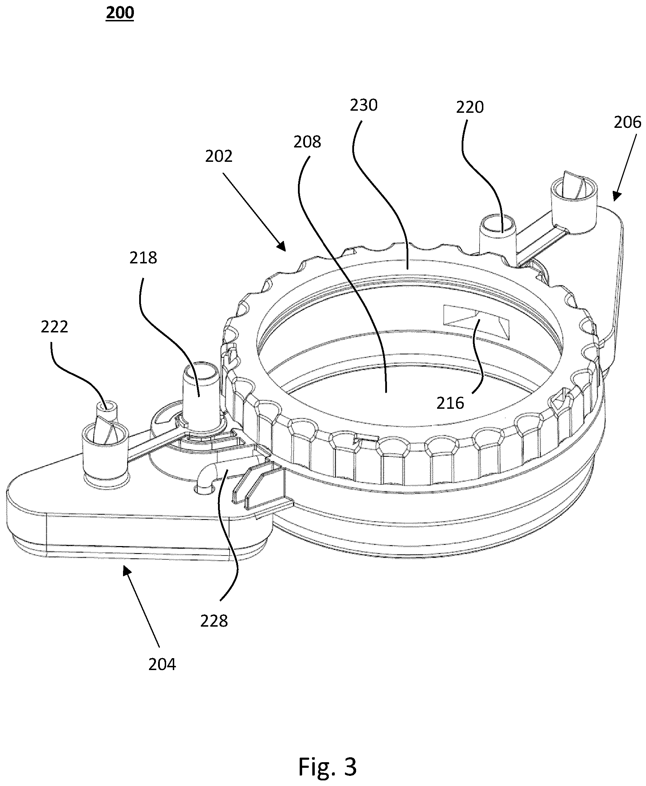

Der erste Ansaugkörper 204 weist eine erste Öffnung 224 auf. Die erste Öffnung 224 ist über einen in Figur 3 dargestellten Luftkanal 228 mit einer zweiten Öffnung 226 des zweiten Ansaugkörpers 206 verbunden. In der hier dargestellten Ausführungsform handelt es sich bei der ersten Öffnung 224 um einen Lufteinlass, während es sich bei der zweiten Öffnung 226, um einen Luftauslass handelt.

Die Vakuumräume 207, 209 der beiden Ansaugkörper 204, 206 sind strömungstechnisch vom Hohlraum des Ansaugkörpers 202 getrennt. Dies wird insbesondere durch die separaten Dichtungen 210, 212, 214 erreicht. Ein Übertritt von Kühlwasser bzw. Bohrschlamms oder Staub aus dem Hohlraum des Absaugkörper 202 in den Vakuumraum 207, 209 der Ansaugkörper 204, 206 ist somit ausgeschlossen. Die Ansaugkörper 204, 206 dienen ausschließlich zum Halten der Auffangvorrichtung 200 an der zu bearbeitenden Oberfläche. Dagegen dient der Absaugkörper 202 ausschließlich dazu, Bohrschlamm oder Staub, welcher während der Bohrung anfällt, aufzufangen und an eine oben bereits beschriebene Aufbereitungsvorrichtung abzuführen.

Zum Befestigen der Auffangvorrichtung 200 an der zu bearbeitenden Oberfläche (zum Beispiel Wand- bzw. Deckenoberfläche), wird ein Unterdruck innerhalb der Vakuumräume 207, 209 erzeugt. Zur Erzeugung des Unterdrucks wird ein Vakuumschlauch an dem Vakuumanschluss 222 des ersten Ansaugkörpers 204 befestigt. Wie in Figur 4 gezeigt, ist der Vakuumanschluss 222 über eine Öffnung 223 mit dem Vakuumraum 207 des ersten Ansaugkörpers 204 verbunden. Über den Vakuumanschluss 222 kann somit ein Unterdruck im ersten Vakuumraum 207 erzeugt werden. Wie oben bereits erwähnt, ist der erste Vakuumraum 207 über einen Luftkanal mit dem zweiten Vakuumraum 209 des zweiten Ansaugkörpers 206 verbunden. Ein Teil des Luftkanals 2 28 ist in Figur 3 dargestellt. Ein anderer, nicht dargestellter Teil des Luftkanals wird vorzugsweise zumindest in den Absaugkörper 202 integriert.

Durch den Luftkanal zwischen den Vakuumräumen 207, 209 der beiden Ansaugkörper 204, 206 kann ein Unterdruck in beiden Vakuumräumen 207, 209 mit einem einzigen Sauganschluss 222 erzielt werden. Insbesondere wird, nach Anschluss des Saugschlauchanschluss 222, Luft aus dem zweiten Vakuumraum 209 über die zweite Öffnung 226, den Luftkanal und die erste Öffnung 224 in den ersten Vakuumraum 207 gesaugt. Die Luft im ersten Vakuumraum 207 wird dann über den Sauganschluss 222 zu einer entsprechenden Vakuumpumpe gefördert. Die Vakuumpumpe kann Teil des der Aufbereitungsvorrichtung sein. Alternativ kann es sich bei der Vakuumpumpe auch um eine separate Vorrichtung handeln. In der dargestellten Ausführungsform muss die Vakuumpumpe nur an einem der beiden Ansaugkörper 204, 206 angeschlossen werden. Ein Druckausgleich zwischen den beiden Ansaugkörper erfolgt über den oben beschriebenen Luftkanal. Alternativ ist es jedoch auch denkbar, die beiden Ansaugkörper 204, 206 strömungstechnisch voneinander zu trennen. In dieser Ausführungsvariante kann jeder der beiden Ansaugkörper 204, 206 mit einem separaten Sauganschluss versehen sein.

Zum Absaugen des Bohrschlamms bzw. Staubs aus dem Hohlraum des Absaugkörpers 202 ist wenigstens eine Absaugöffnung 216 im Hohlraum vorgesehen. In der in den Figuren 2 bis 4 dargestellten Ausführungsform sind insbesondere zwei Absaugöffnung (lediglich zweite Absaugöffnung 216 dargestellt) vorgesehen. Eine erste Absaugöffnung erstreckt sich durch die Innenwand des Hohlraums des Absaugkörpers 202 in Richtung eines ersten Absaugkanals. Die zweite Absaugöffnung 216 erstreckt sich durch die Innenwand des Hohlraums in Richtung eines zweiten Absaugkanal. In den Figuren 2 und 3 enden die Absaugkanäle in Absaugstutzen 218, 220.

Die Absaugstutzen 218, 220 können dazu verwendet werden, einen Saugschlauch des der Aufbereitungsvorrichtung anzuschließen. Somit kann über die beiden Absaugstutzen 218, 220 Bohrschlamm bzw. Staub aus dem Hohlraum gesaugt und zur Aufbereitungsvorrichtung gefördert werden. Im Betrieb ist es sinnvoll, dass jeweils nur einer der beiden Absaugstutzen 218, 220 mit der Aufbereitungsvorrichtung verbunden wird. Der andere Absaugstutzen bleibt offen. Der offene Absaugstutzen dient als Belüftungsöffnung, durch welche das Absaugen des Bohrschlamms bzw. Staubs aus dem Hohlraum begünstigt wird.

In der ersten Ausführungsform gemäß der Figuren 2 bis 4 überlappt der erste Absaugstutzen 218 den ersten Ansaugkörper 204. Der zweite Absaugstutzen 220 überlappt den zweiten Ansaugkörper 206. Die Absaugöffnungen erstrecken sich in Richtung des ersten bzw. zweiten Ansaugkörpers 206. Dies ist insbesondere deshalb vorteilhaft, da einer der beiden Ansaugkörper 204, 206 bei der Verwendung in Wandeckenbereichen senkrecht unterhalb des Absaugkörpers 202 zum Liegen kommt. Durch die beiden Absaugöffnungen wird somit sichergestellt, dass, bei jeder Orientierung der Auffangvorrichtung 200 in den Wandbereichen, der Bohrschlamm in eine der beiden Absaugöffnung herunterläuft.

Figur 4 zeigt die Auffangvorrichtung 200 gemäß der aus ersten Ausführungsform in einer Anwendungssituation. Die Auffangvorrichtung 200 ist eine für Ecken ausgebildete Auffangvorrichtung. In Figur 4 ist diese an einer Wandecke angebracht. Hierzu werden die ersten und zweiten Ansaugkörper 204, 206 so nahe wie möglich an die an der Ecke angrenzenden Oberflächen gebracht. In der hier dargestellten Ausführungsform kann der erste Ansaugkörper 204 beispielsweise möglichst dicht an einer ersten Wandoberfläche 242 positioniert werden. Der zweite Ansaugkörper 206 wird möglichst dicht an einer Deckenoberfläche 244 positioniert. Nachdem die beiden Ansaugkörper 204, 206 gegenüber ihren jeweiligen Oberflächen ausgerichtet sind, kann ein Unterdruck innerhalb der Vakuumräume 207, 209 erzeugt werden. Somit wird die Auffangvorrichtung 200 an der zu bearbeitenden Oberfläche 240 (Wandoberfläche) durch den Unterdruck befestigt.

Um den Absaugkörper 202 möglichst weit im Eckbereich positionieren zu können, sind die ersten und zweiten Ansaugkörper 204, 206 im Wesentlichen senkrecht zueinander ausgerichtet. Insbesondere weist der erste Ansaugkörper 204 eine erste Seitenfläche 232 auf, welche senkrecht gegenüber einer ersten Seitenfläche 234 des zweiten Ansaugkörpers 206 verläuft. Die erste Seitenfläche 232 des ersten Ansaugkörpers 204 kann demnach parallel zur ersten Wandoberfläche 242 ausgerichtet werden. Die erste Seitenfläche 234 des zweiten Ansaugkörper 206 kann parallel zur Deckenoberfläche 244 angeordnet werden.

Im Anwendungsfall gemäß Figur 4 ist der erste Ansaugkörper 204 im Wesentlichen unterhalb des Absaugkörpers 202 angeordnet. Entsprechend ist auch die erste Absaugöffnung (nicht gezeigter) unterhalb der Bohröffnung 208 angeordnet, sodass Bohrschlamm bzw. Kühlwasser unter der Schwerkraft in die Absaugöffnung eintritt und an die Aufbereitungsvorrichtung gefördert werden kann.

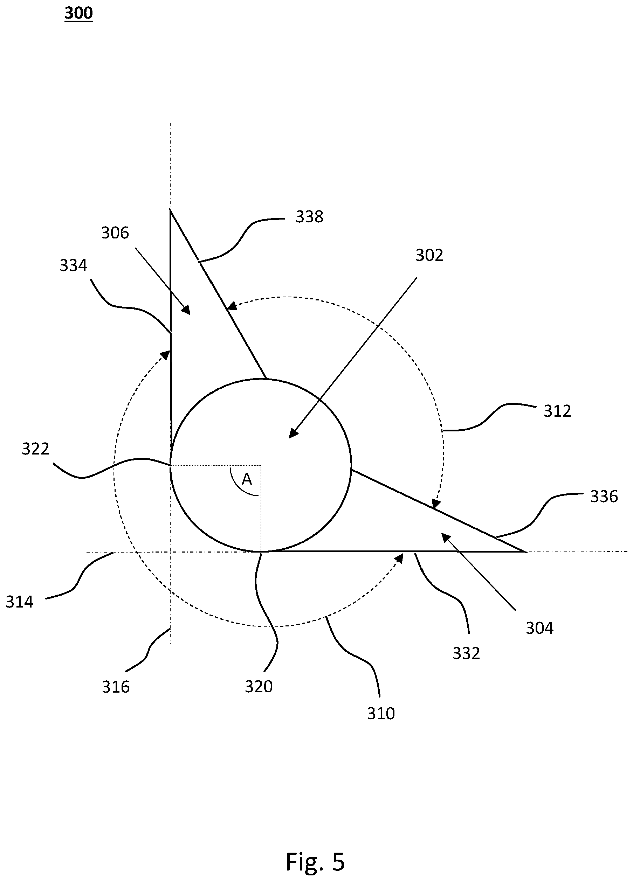

Weitere geometrische Überlegungen der vorliegenden Erfindung sind in Figur 5 verdeutlicht. Figur 5 zeigt eine weitere Ausführungsform der Auffangvorrichtung gemäß der vorliegenden Erfindung. Die Auffangvorrichtung 300 gemäß Figur 5 weist einen Absaugkörper 302 auf. Erste und zweite Ansaugvorrichtungen 304, 306 sind mit dem Außenumfang des Absaugkörpers 302 verbunden. Der Absaugkörper 302 und die Ansaugkörper 304, 306 sind funktional im Wesentlichen identisch zu den oben beschriebenen Absaugung bzw. Ansaugkörper und weisen entsprechende Öffnungen bzw. Anschlüsse auf. Diese sind in Figur 5 der Einfachheit halber nicht dargestellt.

In der in Figur 5 dargestellten Ausführungsform sind die ersten Seitenflächen 332, 334 der Ansaugkörper 304, 306 tangential zum ringförmigen Absaugkörper 302 angeordnet. Mit anderen Worten, die erste Seitenfläche 332 der ersten Anlaufvorrichtung 302 liegt auf einer ersten Tangente 314 des ringförmigen Absaugkörpers 302. Die erste Seitenfläche 334 des zweiten Ansaugkörpers 306 liegt auf einer zweiten Tangente 316 des ringförmigen Absaugkörpers 302. Die beiden ersten Seitenflächen 332, 334 sind senkrecht zueinander ausgerichtet. Entsprechend sind auch die erste und die zweite Tangente 314, 316 senkrecht zueinander ausgerichtet. Es ergibt sich daraus auch, dass die beiden ersten Seitenflächen 332, 334 der ersten und zweiten Ansaugkörper 304, 306 über einen Winkelbereich 310 von 270° voneinander beabstandet sind. Durch diese Beabstandung der ersten Seitenflächen 332, 334 in Umfangrichtung des Absaugkörpers 302, lässt sich der Absaugkörper 302 so nahe wie möglich im Eckbereich platzieren. Der limitierende Faktor ist dabei nicht die Geometrie der Ansaugkörper 304, 306, sondern lediglich der Radius des ringförmigen Absaugkörpers 208. Mit anderen Worten, ein kleinerer Absaugkörper kann weiter in den Eckbereich gesetzt werden, als dies für Absaugkörper mit großen Radien der Fall ist.

Die erste Tangente 314 berührt den Außenumfang des ringförmigen Absaugkörpers 302 an einem ersten Punkt 320. Die zweite Tangente 316 berührt den Außenumfang des ringförmigen Absaugkörpers 302 an einem zweiten Punkt 322. Die beiden Punkte 320, 322 sind aufgrund der senkrechten Ausrichtung der Tangenten 314, 316 derart auf dem Außenumfang des ringförmigen Absaugkörpers 202 angeordnet, dass der zwischen den beiden Punkten 320, 322 entstehende Mittelpunktswinkel A 90° beträgt. Mit anderen Worten, der zwischen den beiden ersten Seitenflächen 332, 334 freiliegende Kreisbogen des ringförmigen Absaugkörpers 302 ergibt sich aus der Formel ½ * π * r.

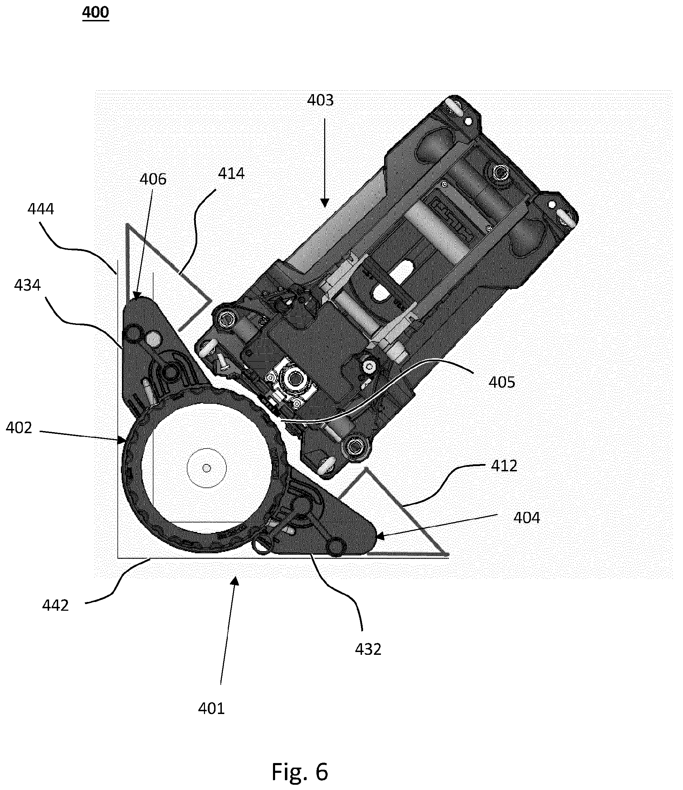

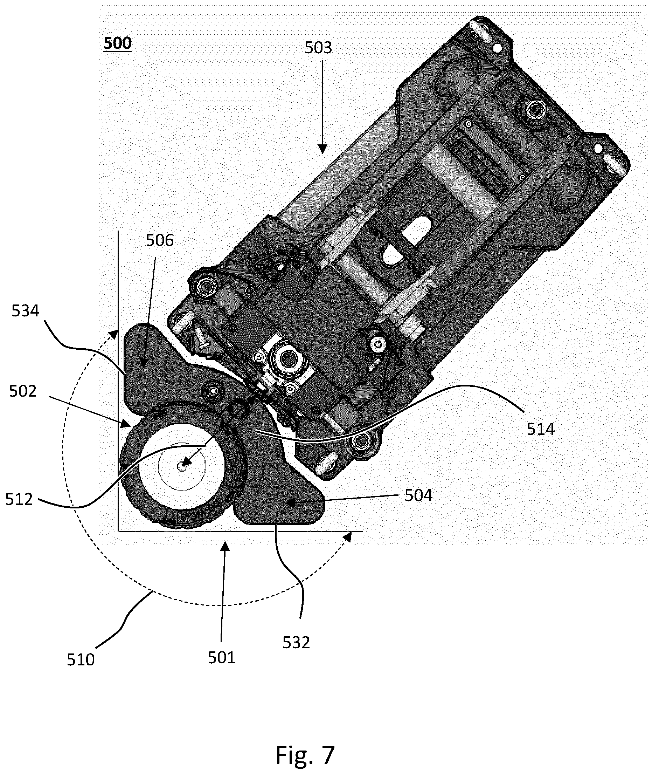

In der Ausführungsform gemäß Figur 5 weisen die ersten und zweiten Ansaugkörper 304, 306 jeweils eine zweite Seitenfläche 336, 338 auf. Die zweiten Seitenflächen 336, 338 sind an einem ersten Ende mit den ersten Seitenflächen 332, 334 verbunden. Die zweiten Seitenflächen 336, 338 erstrecken sich gegenüber den ersten Seitenflächen 332, 334 in einem spitzen Winkel. In der Ausführungsform gemäß Figur 5 sind auch die zweiten Seitenflächen 336, 338 in Umfangrichtung des ringförmigen Absaugkörpers 302 voneinander beabstandet. In der Ausführungsform gemäß Figur 5 handelt es sich bei dem Abstand um einen stumpfen Winkelbereich 312. Durch den Abstand zwischen den zweiten Seitenflächen 336, 338 voneinander, wird ein dem Eckbereich gegenüberliegenden Freiraum geschaffen, an dem beim Bohrständer befestigt werden kann, wie dies beispielsweise mit Bezug auf die Figuren 6 und 7 näher erläutert werden wird.

In der Ausführungsform gemäß Figur 5 verlaufen die ersten Seiten 332, 334 der ersten und zweiten Ansaugkörper 304, 306 auf den ersten und zweiten Tangenten 43, 316 des ringförmigen Absaugkörpers 302. Es ist jedoch auch jede andere Ausrichtung der ersten Seiten 332, 334 denkbar, solange die ersten Seiten 332, 334 die ersten und zweiten Tangenten 43, 316 nicht schneiden. Beispielsweise können die ersten und zweiten Seitenflächen 332 und 334 parallel und im Abstand zu den ersten und zweiten Tangenten 314, 316 angeordnet sein. Durch eine nahe Anordnung der ersten Seitenflächen 332, 334 an den Tangenten 314, 316 des Absaugkörpers wird jedoch eine besonders gute Ausnutzung des zur Verfügung stehenden Bauraums gewährleistet. Somit können die ersten und zweiten Ansaugkörper eine möglichst große Oberfläche aufweisen, ohne den Abstand des Absaugkörpers vom Eckbereich zu beeinflussen und wohne in den Bereich des Spenders einzudringen.

Die Figur 6 zeigt eine schematische Draufsicht auf ein Kernbohrsystem 400. Das Kernbohrsystem 400 weist eine Auffangvorrichtung 401 gemäß einer Ausführungsform der vorliegenden Erfindung auf. Das Kernbohrsystem 400 weist ferner einen Bohrständer 403 auf, welcher zur Befestigung eines Kernbohrgeräts dient. Das Kernbohrgerät selbst ist nicht dargestellt. Dem Fachmann ist jedoch bewusst, dass das Kernbohrgerät vorzugsweise möglichst nahe am Bohrständer bohren soll, um potentielle Hebelkräfte zu minimieren.

Die Auffangvorrichtung gemäß der vorliegenden Erfindung ist derart konzipiert, dass diese möglichst nahe in einen (Wand-) Eckbereich gesetzt werden kann und gleichzeitig eine nahe möglichst Anordnung des Bohrständers 403 am Absaugkörper 402 ermöglicht.

Auch in der Figur 6 sind die Wand- bzw. Deckenoberfläche 442, 444 gezeigt. Die ersten Seitenflächen 432, 434 der Ansaugkörper 404, 406 sind wiederum parallel zu Tangenten der ringförmigen Absaugkörpers 402 angeordnet. Der Abstand zwischen den zweiten Seitenflächen der ersten und zweiten Ansaugkörper 404, 406 ist so gewählt, dass der Bohrständer 403 so nahe wie möglich an den Absaugkörper 402 gesetzt werden kann. Abstand des Bohrständers 403 ist dabei, insbesondere nicht durch die seit zweiten Seitenflächen der Ansaugkörper 404, 406 limitiert. Vielmehr sind die Ansaugkörper 404, 406 derart konstruiert, dass auch die Nähe des Bohrständers 403 zum Absaugkörper 402 ausschließlich durch den Durchmesser des ringförmigen Absaugkörpers 402 limitiert ist. Die Form der Auffangvorrichtung 401 ist auf eine Kontur am vorderen Ende 405 des Bohrständers 403 angepasst.

Figur 6 zeigt ferner eine alternative Ausbildung der ersten und zweiten Ansaugkörperkörper 404, 406. Diese sind durch die Linien 412, 414 schematisch dargestellt. Während gemäß dieser alternativen Ausbildung die ersten Seitenflächen 432, 434 auch weiterhin tangential zum ringförmigen Ansaugkörper 402 und senkrecht zueinander verlaufen, werden die zweiten und weitere Seitenflächen der Ansaugkörper 404, 406 derart gestaltet, dass sich diese um den Bohrständer 403 herum erstrecken. In anderen Worten, die Form der Ansaugkörper 404, 406 ist auf die Außenkontur des Bohrständers 403 angepasst.

Figur 7 zeigt eine schematische Darstellung eines weiteren Kernbohrsystems 500. Das Kernbohrsystem 500 weist eine weitere Ausführungsform einer auf Auffangvorrichtung 501 gemäß der vorliegenden Erfindung auf. Ein zum Bohrständer 403 identischer Bohrständer 503 ist auch Teil des Kernbohrsystems 500 gemäß Figur 7. Somit unterscheidet sich lediglich die Auffangvorrichtung 501 gemäß Figur 7 von der Auffangvorrichtung 401 gemäß Figur 6. Insbesondere weist die Auffangvorrichtung 501 einen Absaugkörper 502 mit einem kleineren Durchmesser auf, als dies bei der Auffangvorrichtung 401 gemäß Figur 6 der Fall ist.

Auch die Auffangvorrichtung 501 gemäß Figur 7 weist wenigstens einen Ansaugkörper auf. In Figur 7 ist der Ansaugkörper jedoch einteilig ausgebildet. Der Ansaugkörper der Auffangvorrichtung 501 weist einen ersten im Wesentlichen dreieckigen Bereich 504 sowie einen zweiten im Wesentlichen dreieckigen Bereich 506 auf. Die beiden dreieckigen Bereiche 504, 506 entsprechen im Wesentlichen den ersten und zweiten Ansaugkörper 404, 406 gemäß Figur 6.

Die beiden Bereiche 504, 506 des Ansaugkörpers sind über einen Verbindungsbereich 514 miteinander verbunden. Mit anderen Worten, der Ansaugkörper gemäß Figur 7 ist einstückig und benötigt keinen Luftkanal innerhalb des Absaugkörpers 502 um einen Unterdruck an beiden Endbereichen 504, 506 zu erzeugen.

Eine erste Seitenfläche 532 des ersten Bereichs 504 ist tangential zum Ansaugkörper 502 und senkrecht zu einer ersten Seitenfläche 534 des zweiten Bereichs 506 ausgerichtet. Die erste Seitenfläche 534 des zweiten Bereichs 506 ist ebenfalls tangential zum ringförmigen Absaugkörper 502 ausgerichtet. Somit sind auch die ersten Seitenflächen 532, 534 der Auffangvorrichtung 501 in Umfangsrichtung voneinander beabstandet, insbesondere über einen Bereich 510, welcher einem Winkel von 72° entspricht. Auf der gegenüberliegenden Seite des Außenumfangs des ringförmigen Absaugkörpers 502 wird der Absaugkörper 502 komplett vom Ansaugkörper überdeckt.

Der Verbindungbereich 514 ist derart ausgebildet, dass dessen Breite dem Abstand der Drehachse des am Bohrständer 503 befestigten Kernbohrgeräts zum vorderen Ende des Bohrständers 503 minus dem Radius des ringförmigen Absaugkörpers entspricht. Mit anderen Worten, ein Abstand 512 zwischen dem vorderen Endbereich des Bohrständers 503 und der Rotationsachse des Kernbohrgeräts wird durch die Verwendung der Auffangvorrichtung 501 nicht verändert. Vielmehr wird bei der Ausführungsform gemäß Figur 7 der kleinere Durchmesser des Absaugkörpers 502 dazu genutzt, um die Oberfläche des Ansaugkörpers in Richtung des Bohrständers zu vergrößern. Dabei kann der Verbindungbereich 514 bogenförmig ausgebildet sein, insbesondere mit einem Radius, welcher maximal dem Abstand 512, d. h. dem Abstand der Drehachse des Kernbohrers vom vorderen Endbereich des Bohrständers 503, entspricht.

Die vorliegende Erfindung ist nicht auf die in den Ausführungsformen dargestellte Merkmalskombinationen beschränkt, sondern ergibt sich aus einer Kombination sämtlicher hierin offenbarter Merkmale.

## Patentansprüche

1. Auffangvorrichtung (200) zum Auffangen von Bohrschlamm oder Staub, der bei Betrieb eines Kernbohrgeräts entsteht, wobei die Auffangvorrichtung (200) folgendes aufweist:
- einen Absaugkörper (202) mit einer Bohröffnung, welche sich durch den Absaugkörper (202) erstreckt und dazu ausgebildet ist eine Bohrkrone aufzunehmen, wobei der Absaugkörper (202) einen Hohlraum aufweist, welcher sich zumindest teilweise um die Bohröffnung erstreckt;
- wenigstens einen Ansaugkörper (204, 206), welcher mit dem Absaugkörper (202) verbunden ist und dazu ausgebildet ist einen Vakuumraum zusammen mit einer Oberfläche, insbesondere Wand- oder Deckenoberfläche, auszubilden,
wobei der Vakuumraum des Ansaugkörpers (204, 206) strömungstechnisch vom Hohlraum des Absaugkörpers (202) getrennt ist.

2. Auffangvorrichtung (200) nach Anspruch 1,
wobei der Absaugkörper (202) im Wesentlichen ringförmig ausgebildet ist.

3. Auffangvorrichtung (200) nach Anspruch 2,
wobei der wenigstens eine Ansaugkörper (204, 206) zwischen 40% und 75% eines Außenumfangs des Absaugkörpers (202) überdeckt.

4. Auffangvorrichtung (200) nach Anspruch 2 oder 3,
wobei die Auffangvorrichtung (200) einen ersten und einen zweiten Ansaugkörper (204, 206) aufweist, wobei die beiden Ansaugkörper (204, 206) in Umfangrichtung des Absaugkörpers (202) voneinander beabstandet sind.

5. Auffangvorrichtung (200) nach Anspruch 4,
wobei der erste Ansaugkörper (204) eine im Wesentlichen achsensymmetrische Außenkontur zum zweiten Ansaugkörper (206) aufweist.

6. Auffangvorrichtung (200) nach Anspruch 4 oder 5,
wobei der erste Ansaugkörper (204) strömungstechnisch mit dem zweiten Ansaugkörper (206) verbunden ist, insbesondere über einen Luftkanal (228), welcher zumindest teilweise durch den Absaugkörper (202) ausgebildet ist.

7. Auffangvorrichtung (200) nach einem der Ansprüche 4 bis 6,
wobei der erste Ansaugkörper (204) eine erste Seitenfläche (232) aufweist, welche im Wesentlichen senkrecht zu einer ersten Seitenfläche (234) des zweiten Ansaugkörpers (206) verläuft, wobei die beiden ersten Seitenflächen der Ansaugkörper (204, 206) in Umfangrichtung des Absaugkörpers (202) voneinander beabstandet sind.

8. Auffangvorrichtung (200) nach Anspruch 7,
wobei die ersten Seitenflächen (232, 234) des ersten und zweiten Ansaugkörpers (204, 206) im Wesentlichen tangential zum Außenumfang des Absaugkörper (202) angeordnet sind.

9. Auffangvorrichtung (300) nach Anspruch 7 oder 8,
wobei der erste Ansaugkörper (304) eine zweite Seitenfläche (336) aufweist, welche der ersten Seitenfläche (332) im Wesentlichen gegenüber liegt, wobei der zweite Ansaugkörpers (306) eine zweite Seitenfläche (338) aufweist, welche der ersten Seitenfläche (334) im Wesentlichen gegenüber liegt, und wobei die beiden zweiten Seitenflächen (336, 338) der Ansaugkörper (304, 306) in Umfangrichtung des Absaugkörpers (202) voneinander beabstandet sind, wobei der Abstand der beiden Seitenflächen derart bemessen ist, dass zumindest ein vorderer Teil eines Bohrständers zwischen den zweiten Seitenflächen angeordnet werden kann.

10. Auffangvorrichtung (200) nach einem der Ansprüche 1 bis 9,
wobei der wenigstens eine Ansaugkörper (204, 206) im Wesentlichen dreieckig oder teilringförmig ausgebildet ist.

11. Auffangvorrichtung (200) nach einem der Ansprüche 1 bis 10,
wobei der wenigstens eine Ansaugkörper (204, 206) einen Saugstutzen (218, 220) aufweist, welcher dazu ausgebildet ist, im Betrieb mit einem Saugschlauch einer Vakuumpumpe verbunden zu werden.

12. Auffangvorrichtung (200) nach Anspruch 11,
wobei der wenigstens eine Ansaugkörper (204, 206) eine Dichtung (212, 214) zum Abdichten eines Vakuumraums (207, 209) gegenüber der Oberfläche aufweist, und wobei der Saugstutzen (218, 220) vorzugsweise an einer der Dichtung gegenüberliegenden Oberfläche des Saugkörpers angeordnet ist.

13. Auffangvorrichtung (200) nach einem der Ansprüche 1 bis 12,
wobei der Absaugkörper (202) eine Dichtung (210) zum Abdichten des Hohlraums gegenüber der Oberfläche aufweist.

14. Auffangvorrichtung (200) nach einem der Ansprüche 1 bis 13,
wobei der Absaugkörper (202) wenigstens eine Absaugöffnung (216) aufweist, welche an einer Innenwand des Hohlraums angeordnet ist und dazu dient Bohrschlamm oder Staub aus dem Hohlraum abzusaugen, wobei die Absaugöffnung über einen Absaugkanal mit einem Saugstutzen (218, 220) verbunden ist, und wobei der Saugstutzen (218, 220) vorzugsweise mit dem Außenumfang des Absaugkörpers (202) verbunden ist.

15. Auffangvorrichtung (200) nach Anspruch 14,
wobei der Saugstutzen (218, 220) den wenigstens einen Ansaugkörper (204, 206) überlappt und/oder Teil des Ansaugkörpers (204, 206) ist.
